# FASCICULE DE BREVET EUROPEEN

(11) **EP 2 378 139 B1**
(45) Date de publication et mention de la délivrance du brevet: **08.03.2017**
(21) Numéro de dépôt: 11162640.4
(22) Date de dépôt: 15.04.2011
(51) Int. Cl.: F16B 5/02, F16B 37/04

(54) **Dispositif imperdable de solidarisation pour équipement de motoculture**
Unverlierbare Verbindungsvorrichtung für ein motorisiertes landwirtschaftliches Arbeitsgerät
Captive connection device for motorized agricultural working vehicle

(30) Priorité: 12.10.2010 FR 1058308; 16.04.2010 FR 1052929
(43) Date de publication de la demande: 19.10.2011
(73) Titulaire: PUBERT HENRI SAS, 85110 Chantonnay (FR)
(72) Inventeur: Gerbaud, Nicolas, 85110, MONSIREIGNE (FR); Herbreteau, Samuel, 49300, CHOLET (FR); Vion, Peter, 85700, POUZAUGES (FR); Dolliou, Ludwig, 85110, CHANTONNAY (FR)
(74) Mandataire: Vidon Brevets & Stratégie

(56) Documents cités:
- EP-A2- 0 390 062
- DE-B3-102006 029 351
- GB-A- 2 215 420

## Description

### 1. Domaine technique de l'invention

L'invention concerne les systèmes de fixation imperdables, en particulier un dispositif imperdable selon le préambule de la revendication 1 (DE 10 2006 029 351 B3). L'invention s'applique en particulier aux équipements de motoculture, comme par exemple les motobineuses.

### 2. Arrière-plan technologique

La dernière révision de la Directive européenne « Machine » 2006/42/CE, applicable depuis le 29 décembre 2009 et qui concerne la sécurité des personnes vis-à-vis des machines, impose dorénavant que les protecteurs fixes des machines soient munis de systèmes de fixation imperdables.

Une telle Directive s'applique en particulier aux équipements de motoculture tels que les motobineuses, les motoculteurs, les débroussailleuses ou tout équipement équivalent.

Cette Directive vise notamment, pour cette application, à limiter les risques de contact inopiné du conducteur avec les outils rotatifs (fraises) et les éléments de transmission (courroies) de l'équipement.

De manière connue, des systèmes de fixation imperdables sont utilisés dans certains dispositifs qui requièrent une sécurité lors du démontage/remontage des pièces constitutives du dispositif, sans risque de perdre un élément du système de fixation, ce qui pourrait nuire au bon fonctionnement du dispositif et à la sécurité de l'utilisateur. Toutefois, il n'existe pas de système spécifiquement adapté au domaine de la motoculture.

### 3. Objectifs de l'invention

Dès lors, l'invention vise à pallier ce manque.

En particulier, l'invention vise à fournir, dans au moins un mode de réalisation, un système de fixation fiable et aisé à mettre en place.

L'invention vise aussi à fournir, dans au moins un mode de réalisation, un système de fixation économique à fabriquer.

L'invention vise également à fournir un système de fixation qui amortit les vibrations, et qui minimise le risque de démontage du système de fixation sous l'effet des vibrations.

Un autre objectif de l'invention est de minimiser le risque de perdre un élément du système de fixation lorsque celui-ci est démonté par un utilisateur, lors d'opérations d'entretien par exemple.

### 4. Exposé de l'invention

Pour ce faire, l'invention concerne un dispositif imperdable de solidarisation d'une première pièce et d'une seconde pièce d'un équipement de motoculture dont des bords viennent en superposition, le dispositif comprenant :
- une première portion définissant un premier logement présentant une section en U, apte à venir chevaucher le bord de la première pièce, et présentant un trou taraudé, apte à coopérer avec le pas de vis d'une vis ; et
- une deuxième portion portant une ouverture apte à recevoir la vis, et venant se placer sur le bord de la seconde pièce, de façon que, dans une position de solidarisation des pièces, l'ouverture soit superposée au trou taraudé et que la vis traverse les première et seconde pièces et soit maintenue dans le trou taraudé.

Selon l'invention, le premier logement présente un pion, dans le prolongement du trou taraudé, apte à coopérer avec une ouverture correspondante ménagée dans la première pièce dans la position de solidarisation desdites pièces.

Le dispositif de l'invention vise donc, lorsqu'il coopère avec une vis, à solidariser deux pièces d'un équipement de motoculture, par exemple une tôle avec un capot.

Plus précisément, le dispositif de l'invention solidarise le bord de deux pièces d'un équipement de motoculture une fois ces bords superposés.

Pour ce faire, une première portion du dispositif de l'invention définit un premier logement en U dans lequel on vient loger le bord d'une première pièce de l'équipement et une deuxième portion du dispositif de l'invention vient se placer sur le bord de la deuxième pièce de l'équipement. Une fois ces deux bords superposés, on insère une vis dans une ouverture de la deuxième portion, cette vis venant traverser les deux pièces superposées de l'équipement de motoculture, le pas de vis venant ensuite coopérer avec un trou taraudé du logement en U.

Le premier logement présente un pion qui coopère avec une ouverture correspondante ménagée dans la première pièce. De ce fait, les risques de désolidarisation et de perte du dispositif imperdable relié à la première pièce sont minimisés, même lorsque la vis est retirée. En outre, un tel pion permet d'assurer l'insertion à l'aveugle de la vis destinée à finaliser l'assemblage des deux pièces.

Un tel dispositif est fiable et aisé à mettre en place.

Dans une mise en oeuvre particulière, le premier logement présente au moins une extension apte à coopérer avec une forme correspondante prévue à cet effet sur la première pièce, de façon à contrôler la position et/ou l'orientation du dispositif imperdable de solidarisation par rapport à ladite première pièce.

De manière avantageuse, le second logement présente un pion, dans le prolongement de l'ouverture, apte à coopérer avec une ouverture ménagée dans la deuxième pièce.

Lorsqu'un tel pion coopère avec l'ouverture correspondante ménagée dans la seconde pièce, la solidarisation du dispositif imperdable et de la seconde pièce de l'équipement est améliorée.

Dans un mode de réalisation particulier, dans la position de solidarisation, la deuxième portion définit un second logement présentant une section en U, venant chevaucher le bord de la seconde pièce, le fond du second logement étant symétriquement opposé au fond du premier logement, formant schématiquement un S dont la paroi centrale est en contact avec la première pièce et la seconde pièce.

Le dispositif de l'invention présente deux logements en U disposés symétriquement de façon à former schématiquement un S.

Dans une alternative, le dispositif de l'invention présente deux logements en U qui sont disposés l'un au dessus de l'autre de façon à former schématiquement un E.

Une telle solution facilite l'assemblage des première et seconde pièces de l'équipement de motoculture.

De manière avantageuse, la deuxième portion présente une paroi mobile, entre la position de solidarisation dans laquelle elle est parallèle à la paroi centrale, et une position de libération, dans laquelle elle est redressée par rapport à la paroi centrale, de façon à faciliter l'assemblage des première et seconde pièces.

Le dispositif de l'invention en forme de S présente deux parois d'extrémité et une paroi centrale, une paroi d'extrémité étant mobile par rapport à la paroi centrale entre une position de libération facilitant l'insertion du bord de la seconde pièce dans le second logement et une position de solidarisation dans laquelle elle est sensiblement parallèle à la paroi centrale, ces deux parois étant situées de chaque côté du bord de la seconde pièce.

Préférentiellement, dans la position de libération, la paroi mobile forme un angle compris entre 20 et 180° avec la paroi centrale.

Avantageusement, la première portion présente une paroi inférieure comprenant une première face située du côté du premier logement, et une deuxième face comprenant au moins une nervure qui s'étend perpendiculairement à la deuxième face.

Ce ou ces nervures sont destinées à rigidifier la première portion du dispositif. On peut prévoir des nervures pour rigidifier la deuxième portion éventuellement.

Dans un autre mode de réalisation de l'invention, le plan de la paroi mobile est perpendiculaire au plan de la paroi centrale dans la position de libération et parallèle au plan de la paroi centrale dans la position de solidarisation.

Dans le cas particulier ou l'accessibilité à l'un ou aux deux bords des éléments de l'équipement de motoculture est difficile, le plan de la paroi mobile lorsque celle-ci est dans sa position de libération est perpendiculaire au plan de la paroi centrale. Pour solidariser les bords des deux éléments, il est nécessaire de vriller la paroi mobile d'un angle sensiblement égal à 90° et de rabattre cette paroi mobile parrallèlement à la paroi centrale (position de solidarisation).

Avantageusement, le dispositif imperdable de solidarisation est en matière thermo-plastique.

Un tel dispositif est ainsi peu coûteux à fabriquer.

### 5. Liste des figures

D'autres buts, caractéristiques et avantages de l'invention apparaîtront à la lecture de la description suivante donnée à titre uniquement non limitatif et qui se réfère aux figures annexées, dans lesquelles :
- la figure 1 est une vue en perspective d'une motobineuse comprenant plusieurs systèmes, ou attaches, imperdables, selon un mode de réalisation de l'invention ;
- les figures 2A et 2B sont des vues en perspective de dessus et de dessous respectivement d'une motobineuse comprenant plusieurs attaches imperdables, selon un mode de réalisation de l'invention ;
- la figure 3 représente plusieurs vues d'un clip d'une attache imperdable de l'invention, selon un premier mode de réalisation ;
- la figure 4 représente plusieurs vues d'un clip d'une attache imperdable de l'invention, selon un second mode de réalisation ;
- la figure 5 est une vue en coupe, de côté, d'une attache imperdable de l'invention lorsqu'elle fixe ensemble deux éléments d'une motobineuse, selon le premier mode de réalisation ;
- la figure 6 est une vue en coupe, de côté, d'une attache imperdable de l'invention lorsqu'elle fixe ensemble deux éléments d'une motobineuse, selon le second mode de réalisation ;
- les figures 7A et 7B représentent l'assemblage de deux pièces d'un capot de protection des fraises d'une motobineuse par le biais d'une attache imperdable de l'invention, selon le premier mode de réalisation ;
- les figures 8A et 8B représentent l'assemblage de deux pièces d'un capot de protection de courroie d'une motobineuse par le biais d'une attache imperdable de l'invention, selon le second mode de réalisation ;
- la figure 9 est une vue de détail de la figure 8A ;
- la figure 10 représente plusieurs vues d'un clip d'une attache imperdable de l'invention, selon un troisième mode de réalisation ;
- la figure 11 représente plusieurs vues d'un clip d'une attache imperdable de l'invention, selon un quatrième mode de réalisation ;
- la figure 12 représente plusieurs vues d'un clip d'une attache imperdable de l'invention, selon un cinquième mode de réalisation ;
- la figure 13 représente plusieurs vues d'un clip d'une attache imperdable de l'invention, selon un sixième mode de réalisation ;
- la figure 14 représente plusieurs vues d'un clip d'une attache imperdable de l'invention, selon un septième mode de réalisation ;
- la figure 15 représente plusieurs vues d'un clip d'une attache imperdable de l'invention, selon un huitième mode de réalisation ;
- la figure 16 représente plusieurs vues d'un clip d'une attache imperdable de l'invention, selon un neuvième mode de réalisation.

### 6. Description de plusieurs modes de réalisation de l'invention

Le dispositif imperdable de solidarisation de l'invention est décrit par la suite lorsqu'il est mis en oeuvre dans une motobineuse. Un tel dispositif (également appelé attache imperdable) peut bien entendu être mis en oeuvre sur d'autres équipements de motoculture, comme par exemple les motoculteurs et les débroussailleuses, et plus généralement sur d'autres machines.

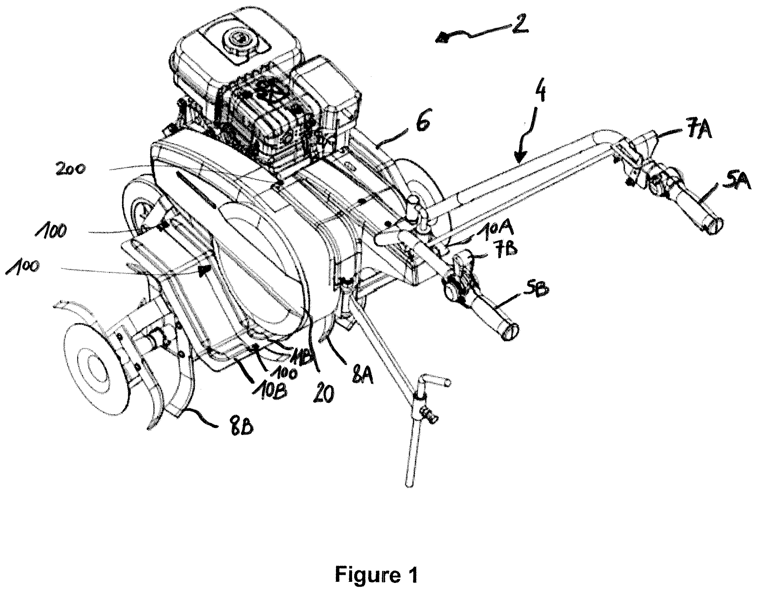

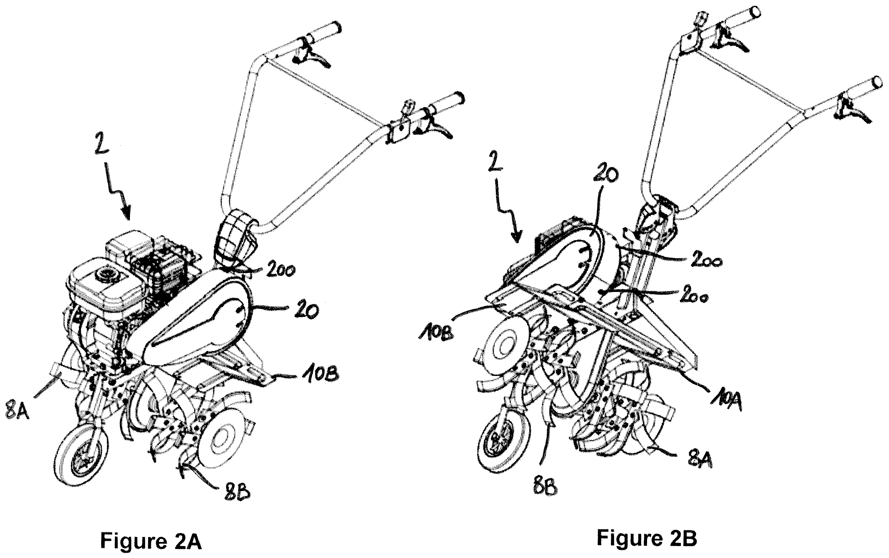

Les figures 1, 2A et 2B représentent une motobineuse 2 comportant, de manière classique, un guidon 4 à l'extrémité duquel se trouvent des poignées 5A, 5B, un carter 6, ou corps de la machine, et des outils de travail du sol (8A, 8B) sous la forme de fraises. Cette motobineuse 2 comporte, dans cet exemple, un moteur à combustion. Il pourrait également s'agir d'un moteur électrique.

Des commandes 7A, 7B, situées à proximité des poignées 5A, 5B, permettent à l'utilisateur de commander la motobineuse 2, et notamment la puissance fournie par le moteur.

On distingue, sur ces figures 1, 2A et 2B, des tôles 10A, 10B de protection des outils de travail du sol 8A, 8B et le capot 20 de protection des courroies de transmission.

Ces tôles 10A, 10B et ce capot 20 sont assemblés sur la motobineuse à l'aide de plusieurs attaches imperdables 100, 110 et 200, 210 respectivement, selon l'invention.

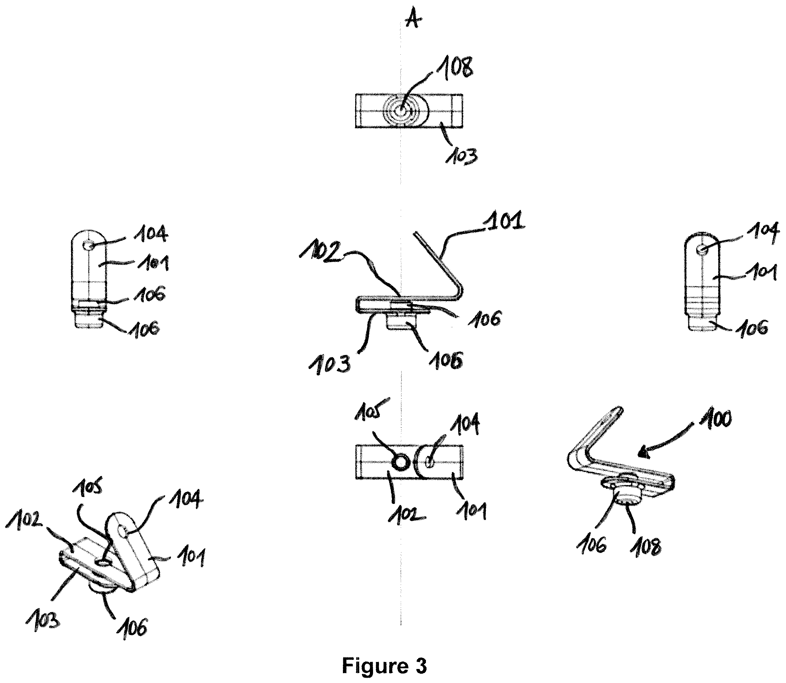

La figure 3 présente plusieurs vues d'un clip pliable 100 d'une attache imperdable 100, 110 de l'invention, en position de libération, selon un premier mode de réalisation.

Le clip 100 est réalisé en matière thermoplastique, par exemple en polyoxyméthylène/polyformaldéhyde (POM) ou en polyamide (PA). Le clip comporte trois parties 101, 102, 103 reliées entre elles par des portions. Les parties 102, 103 sont sensiblement parallèles et la partie ou languette 101 est flexible et inclinée par rapport à la partie 102 d'un angle sensiblement égal à 45° par exemple.

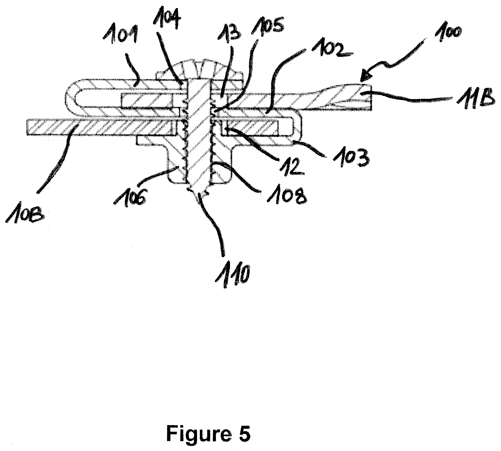

Les parties 101, 102 comportent un trou traversant 104, 105 respectivement qui sont destinés à guider une vis 110 de fixation, comme illustré sur la figure 5. L'extrémité filetée de cette vis 110 de fixation vient se loger dans un trou taraudé 108 ménagé dans un pion 106 formé dans ou solidaire de la partie 103. Dans la position de libération illustrée sur les vues de la figure 3, le trou 105 et le trou taraudé 108 sont coaxiaux selon l'axe A.

On distingue, sur la figure 5, le bord de la tôle 10B de protection des fraises qui est retenue dans le logement défini entre les parties 102 et 103 du clip de l'attache 100, le logement présentant une section en U. Afin d'insérer le bord de la tôle 10B dans ce logement, il est nécessaire d'écarter les parties 102 et 103 du clip, d'insérer la partie supérieure du pion 106 dans un orifice 12 ménagé dans la tôle 10B et de relâcher les parties 102 et 103. Ainsi, le clip 100 est maintenu sur la tôle 10B.

Le bord de la tôle 11B de la motobineuse 2 est maintenue dans le logement défini entre les parties 101 et 102 du clip de l'attache 100. Pour ce faire, on insère le bord de la tôle 11B entre les parties 101 et 102, et on rabat la partie 101 sur la partie 102 de telle façon que les parties 101 et 102 soient sensiblement parallèles et que les trous 104, 105 et l'orifice 13 ménagé dans la tôle 11B soient en regard (c'est-à-dire coaxiaux selon l'axe A). La vis 110 est introduite dans les trous 104, 105 et l'orifice 13, puis est vissée dans le trou taraudé 108.

Une fois les tôles 10B et 11B assemblées par le biais d'une ou de plusieurs attaches imperdables 100, les trois parties 101, 102 et 103 sont superposées, le clip présentant la forme d'un S qui pince la tôle 10B de protection des fraises et la tôle 11B de la motobineuse de façon à fixer ces deux tôles l'une à l'autre (le clip est dès lors en position de solidarisation).

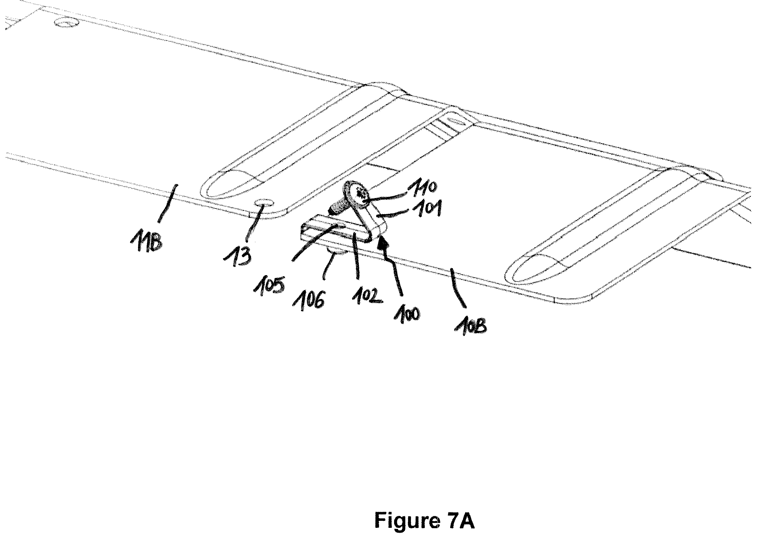

La figure 7A illustre les tôles 10B et 11B avant que celles-ci ne soient assemblées ou après qu'elles aient été séparées, le clip 100 étant fixé sur une extrémité de la tôle 10B, la vis 110 étant introduite dans l'orifice 104 de la partie 101 du clip 100.

On notera que la vis 110 de fixation reste solidaire de la languette flexible 101 une fois les tôles 10B et 11B séparées et que le clip 100 reste solidaire de la tôle 10B, ce qui minimise les risques de perte du clip ou de la vis.

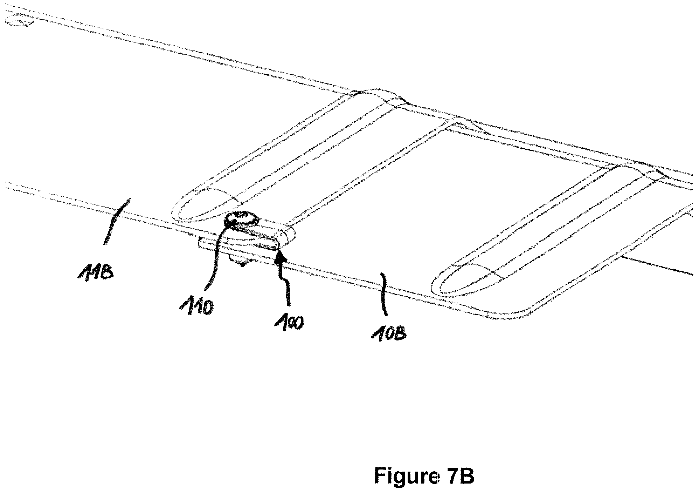

La figure 7B illustre les tôles 10B et 11B lorsque celles-ci sont assemblées par le biais d'au moins une attache imperdable 100 de l'invention.

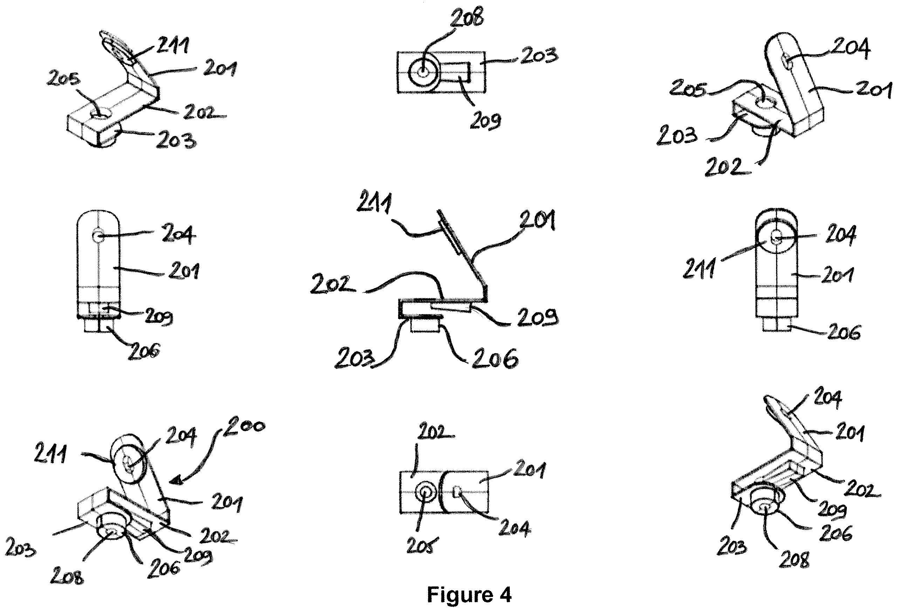

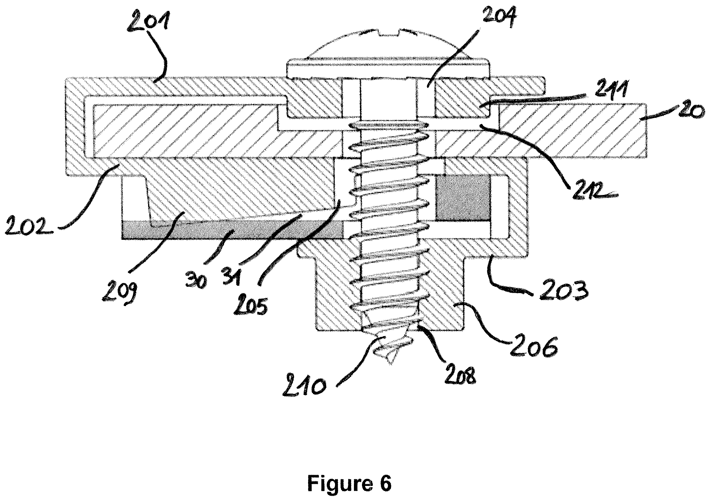

La figure 4 représente plusieurs vues d'un clip pliable 200 d'une attache imperdable 200, 210 de l'invention, en position de libération, selon un second mode de réalisation. Un tel clip 200 est utilisé pour fixer le capot 20 de protection des courroies de transmission sur un support 30 de la motobineuse 2 comme illustré sur les figures 6, 8A, 8B et 9.

La structure du clip représenté sur la figure 4 est sensiblement identique à celle du clip représenté sur la figure 3 (les références numériques ont par conséquent été incrémentées de 100).

On notera que la partie 201 du clip 200 comprend un pion 211 qui vient coopérer avec un logement circulaire 212 ménagé dans le capot 20. Cette partie 201 comprend un trou 204 traversant de forme oblongue qui permet de faciliter le passage de la vis de fixation 210, l'alignement entre le capot 20 en plastique et le support 30 en tôle pouvant présenter des variations dimensionnelles. La partie 202 du clip 200 comprend une rampe ou extension 209 qui vient coopérer avec une gorge 31 ménagée dans le support 30 de façon à contrôler la position et/ou l'orientation du clip 200 par rapport au support 30. En outre, la partie 203 du clip 200 comprend un pion 206 formé dans ou solidaire de la partie 203.

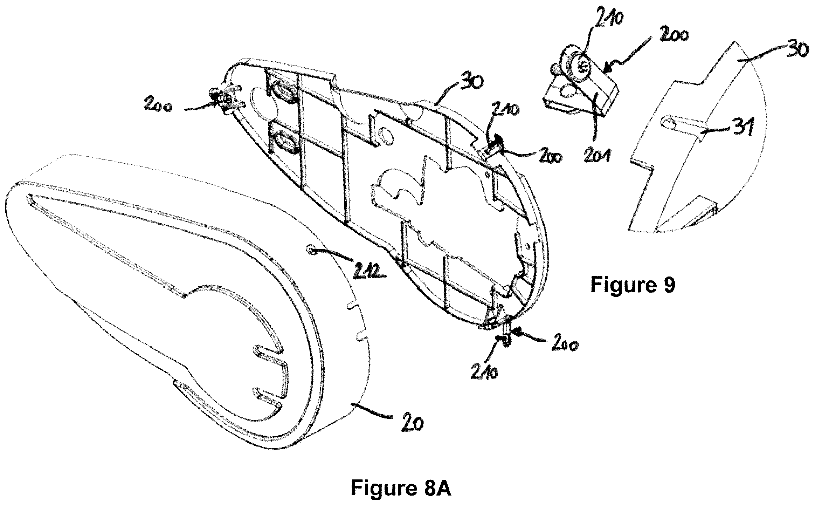

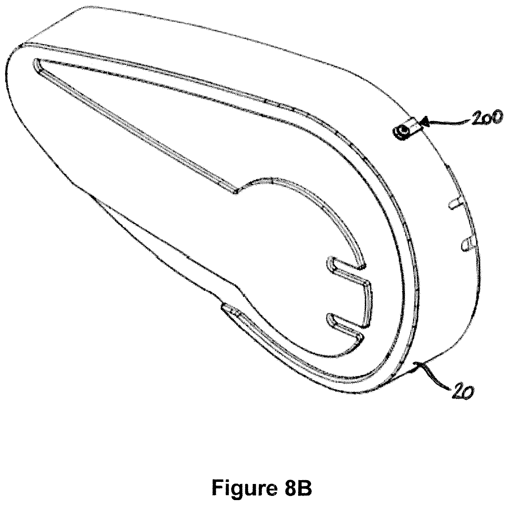

On notera que la vis 210 de fixation reste solidaire de la languette flexible 201 une fois le capot 20 et le support 30 séparés (figure 8A) et que le clip 200 reste solidaire du support 30, ce qui minimise les risques de perte du clip ou de la vis.

Les attaches imperdables 100, 200 assurent ainsi une fixation particulièrement efficace des tôles 10A, 10B de protection des outils de travail du sol 8A, 8B et du capot 20 de protection des courroies de transmission sur la motobineuse 2.

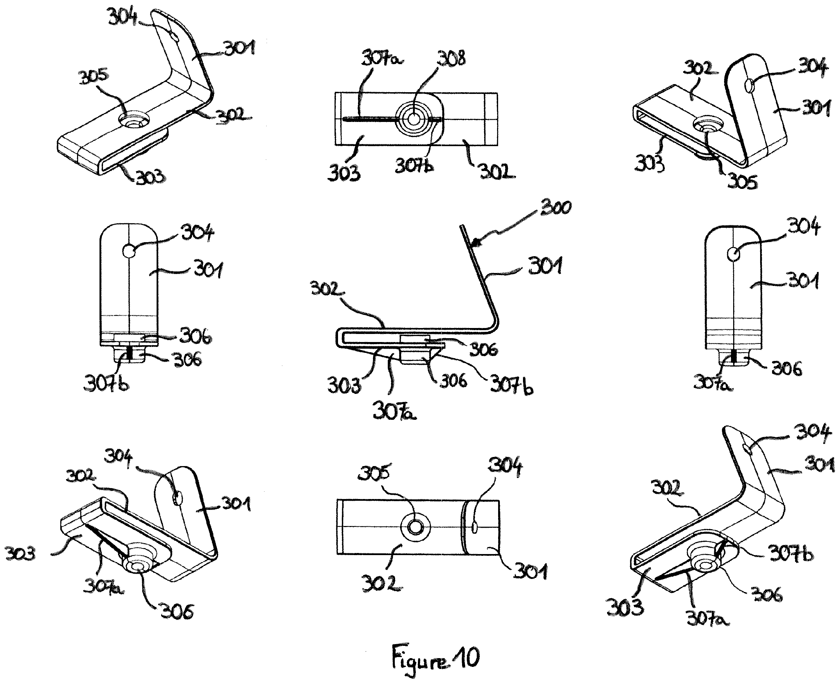

Les figures 10 à 16 illustrent des modes de réalisation alternatifs d'un clip d'une attache imperdable de l'invention, les clips de ces modes de réalisation étant représentés en position de libération.

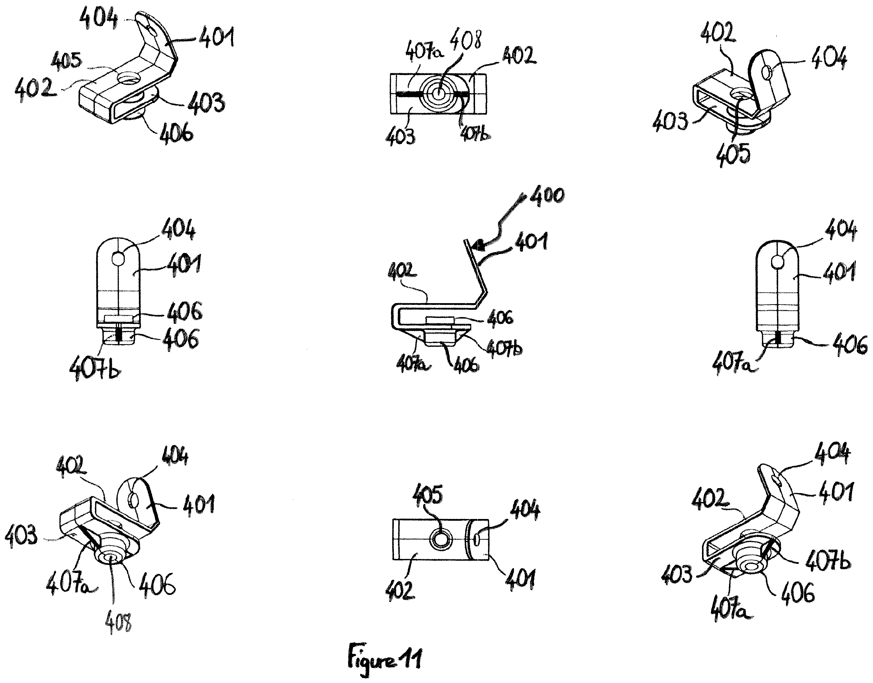

Les figures 10 et 11 représentent respectivement plusieurs vues d'un clip pliable 300 et 400 selon un troisième et quatrième mode de réalisation respectivement.

La structure des clips représentés sur les figures 10 et 11 est sensiblement identique à celle des clips représenté sur les figures 3 et 4 (les références numériques ont par conséquent été incrémentées de 100).

Le clip 300, 400 est utilisé pour fixer les tôles 10B de protection des fraises et 11B de la motobineuse.

On notera que la partie 303 (respectivement 403) du clip 300 (respectivement 400) comprend des nervures 307a, 307b (respectivement 407a, 407b) situées sur deux côtés opposés du pion 306 (respectivement 406) et s'étendant perpendiculairement à la surface de la partie 303. Ces nervures sont destinées à rigidifier la partie 303 (respectivement 403) du clip. Les parties 301, 401 comprennent un orifice 304, 404 traversant de forme oblongue et le logement défini par les parties 302, 303 et 402, 403 présente un pion 306, 406 apte à coopérer avec une ouverture ménagée dans le pièce destinée à être logée dans ce logement.

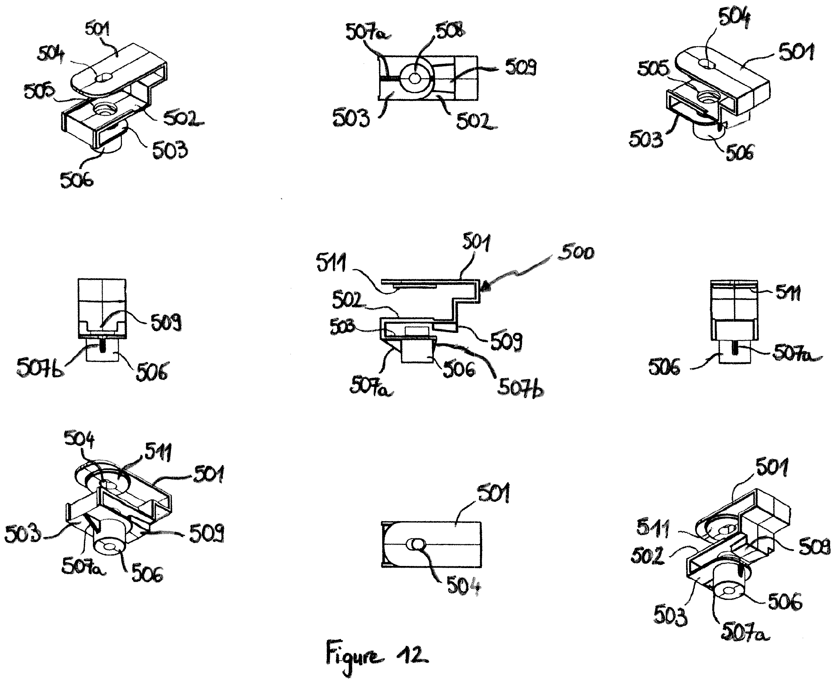

Le clip pliable 500 illustré sur les différentes vues du mode de réalisation de la figure 12, peut être utilisé pour fixer le capot 20 de protection des courroies de transmission sur un support 30 de la motobineuse. Le clip 500 possède une partie 501 sensiblement parallèle aux parties 502 et 503, cette partie 501 comprenant un pion 511 et un orifice 504 traversant de forme oblongue. La partie 503 du clip 500 comporte en outre un ergot 509 qui coopère avec un logement du capot 20, et le logement défini par les parties 502 et 503 présente un pion 506 apte à coopérer avec une ouverture ménagée dans la pièce destinée à être reçue dans ce logement.

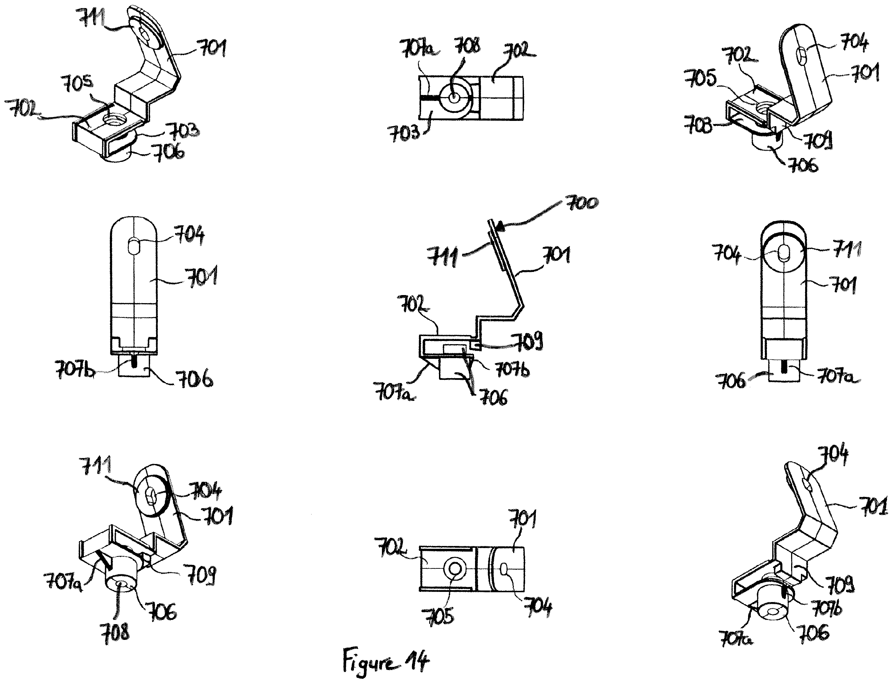

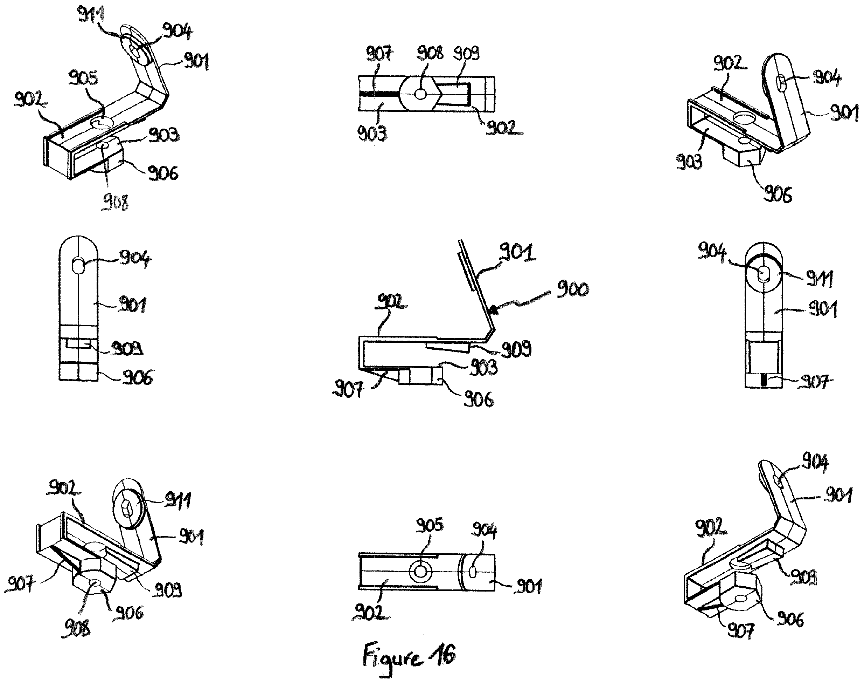

D'autres variantes de ce clip 500, en l'occurrence les clips 700 et 900, sont illustrées sur les différentes vues des modes de réalisation des figures 14 et 16 respectivement.

La structure des clips représentés sur ces figures 14 et 16 est sensiblement identique à celle des clips représenté sur les figures 3 et 4.

Les clips 700 et 900 comprennent trois parties, 701 à 703 et 901 à 903 respectivement, qui sont reliées entre elles par des portions dont la forme varie selon la variante illustrée. Les parties 701 et 702, 901 et 902 comportent un trou traversant 704 et 705, 904 et 905 respectivement qui sont destinés à guider une vis. L'extrémité filetée de cette vis vient se loger dans un trou taraudé 708, 908 ménagé dans un pion 706, 906 formé dans ou solidaire de la partie 703, 903 respectivement.

Le clip 700 comprend en outre un pion 711, deux nervures 707a, 707b et une rampe 709. Le logement défini par les parties 702 et 703 présente un pion 706 apte à coopérer avec une ouverture ménagée dans la pièce destinée à être reçue dans ce logement

Le clip 900 comprend en outre un pion 911, une nervure 907 et une rampe 909.

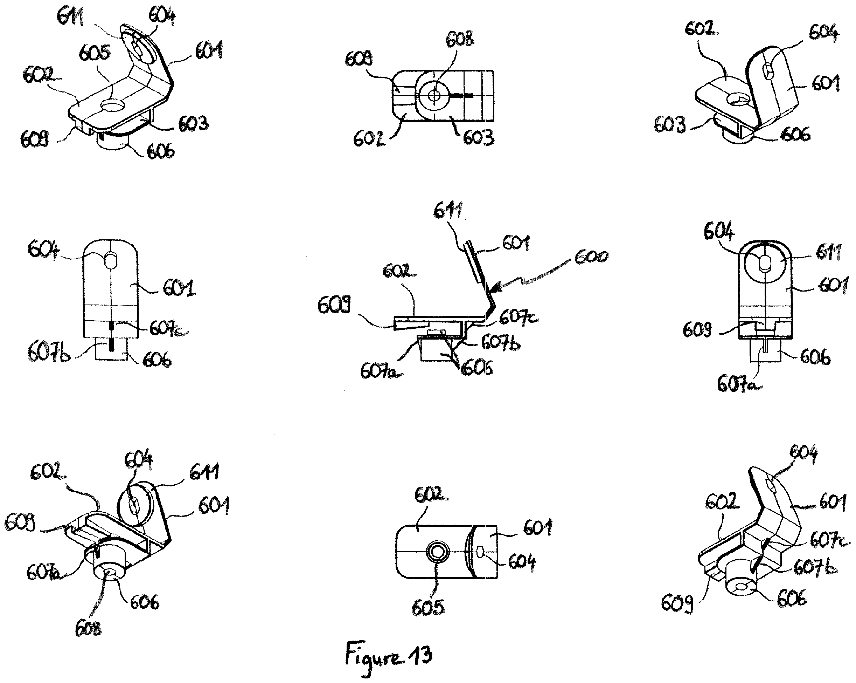

La figure 13 montre une variante de clip 600 en position de libération présentant trois parties 601 à 603. En position de solidarisation, ces trois parties 601 à 603 définissent deux logements de section en U superposés de telle sorte que le clip présente la forme d'un E. La partie 601 du clip 600 comprend un pion 611 et un orifice 604 traversant de forme oblongue. La partie 602 du clip 600 comprend un orifice traversant 605, une rampe 609 et une nervure 607c. La troisième partie 603 comprend un pion 606 et des nervures 607a, 607b. Le logement défini par les parties 602 et 603 présente un pion 606 apte à coopérer avec une ouverture ménagée dans la pièce destinée à être reçue dans ce logement

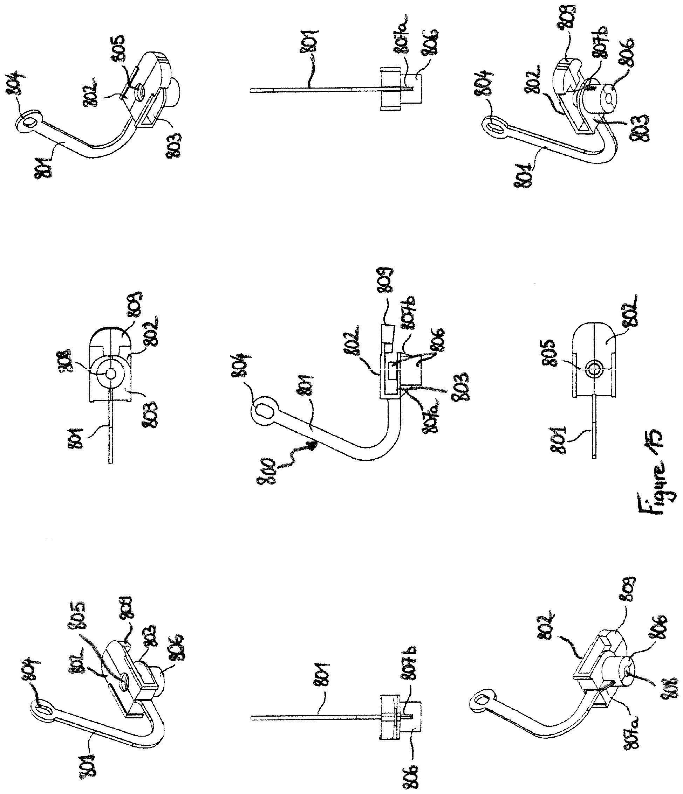

La figure 15 montre une variante de clip 800 destiné par exemple à la fixation d'un capot de courroie sur un support de la motobineuse, dans le cas particulier ou l'accessibilité à l'un ou aux deux éléments (capot et/ou support) est délicate. Le clip 800 est constitué d'une première partie 801 de forme courbe qui comprend à une première extrémité un oeillet 804 avec un trou, apte à recevoir et maintenir une vis, et qui est reliée à une deuxième extrémité aux parties 802 et 803 qui définissent un élément en forme de U.

Afin de fixer le capot de courroie sur un support de la motobineuse, il est nécessaire de vriller la partie 801 d'un angle sensiblement égal à 90° et de rapprocher l'oeillet 804 de la surface supérieure de la partie 802, le capot de courroie étant placé entre l'oeillet 804 et la partie 802. Une fois que l'orifice de l'oeillet 804 est aligné avec le trou 805 de la partie 802 (le clip 800 est alors en psotion de solidarisation) et le trou taraudé 808 du pion 806 de la partie 803, et que le support de la motobineuse est placé entre la surface inférieure de la partie 802 et la surface supérieure de la partie 803, une vis peut être introduite dans les trous 804 et 805 puis vissée dans le trou taraudé 808.

On notera que le clip 800 comprend deux nervures 807a, 807b et une rampe 809 que et le logement défini par les parties 802 et 803 présente un pion 806 apte à coopérer avec une ouverture ménagée dans la pièce destinée à être reçue dans ce logement

## Revendications

1. Dispositif imperdable de solidarisation d'une première pièce (10B) et d'une seconde pièce (11B) d'un équipement de motoculture dont des bords viennent en superposition, comprenant :
- une première portion (102, 103) définissant un premier logement présentant une section en U, apte à venir chevaucher le bord de ladite première pièce (10B), et présentant un trou taraudé (105, 108), apte à coopérer avec le pas de vis d'une vis (110); et
- une deuxième portion (101) portant une ouverture (104) apte à recevoir ladite vis (110), et venant se placer sur le bord de la seconde pièce (11B), de façon que, dans une position de solidarisation desdites pièces (10B, 11B), ladite ouverture (104) soit superposée au trou taraudé (105, 108) et que ladite vis (110) traverse lesdites première et seconde pièces (10B, 11B) et soit maintenue dans ledit trou taraudé (105, 108),
ledit dispositif étant **caractérisé en ce que** ledit premier logement présente un pion (106), dans le prolongement dudit trou taraudé (105, 108), apte à coopérer avec une ouverture (12) correspondante ménagée dans ladite première pièce (10B) dans la position de solidarisation desdites pièces (10B, 11B).

2. Dispositif selon la revendication 1, **caractérisé en ce que** ledit premier logement présente au moins une extension (209) apte à coopérer avec une forme correspondante prévue à cet effet sur ladite première pièce (10B), de façon à contrôler la position et/ou l'orientation dudit dispositif par rapport à ladite première pièce (10B).

3. Dispositif selon la revendication 1 ou 2, **caractérisé en ce que**, dans ladite position de solidarisation, ladite deuxième portion (101) définit un second logement présentant une section en U, venant chevaucher le bord de ladite seconde pièce (11B), le fond dudit second logement étant symétriquement opposé au fond du premier logement, formant schématiquement un S dont la paroi centrale (102) est en contact avec ladite première pièce (10B) et ladite seconde pièce (11B).

4. Dispositif selon la revendication 3, **caractérisé en ce que** ledit second logement présente un pion (211), dans le prolongement de ladite ouverture (204), apte à coopérer avec une ouverture (212) ménagée dans ladite deuxième pièce (20).

5. Dispositif selon l'une quelconque des revendications 1 à 4, **caractérisé en ce que** ladite deuxième portion (101) présente une paroi (101) mobile, entre ladite position de solidarisation dans laquelle elle est parallèle à ladite paroi centrale (102), et une position de libération, dans laquelle elle est redressée par rapport à ladite paroi centrale (102), de façon à faciliter l'assemblage desdites première et seconde pièces (10B, 11B).

6. Dispositif selon la revendication 5, **caractérisé en ce que**, dans la position de libération, ladite paroi mobile (101) forme un angle compris entre 20 et 180° avec ladite paroi centrale (102).

7. Dispositif selon l'une quelconque des revendications 1 à 6, **caractérisé en ce que** ladite première portion (302, 303) présente une paroi (303) inférieure comprenant :
- une première face située du côté du premier logement, et
- une deuxième face comprenant au moins une nervure (307a, 307b) qui s'étend perpendiculairement à ladite deuxième face.

8. Dispositif selon l'une quelconque des revendications 5 à 7, **caractérisé en ce que** le plan de ladite paroi mobile (801) est perpendiculaire au plan de la paroi centrale (802) dans ladite position de libération et parallèle au plan de la paroi centrale (802) dans ladite position de solidarisation.

9. Dispositif selon l'une des revendications 1 à 8, **caractérisé en ce qu'**il est en matière thermo-plastique.

## Patentansprüche

1. Unverlierbare Vorrichtung zur Verbindung eines ersten Teils (10B) mit einem zweiten Teil (11 B) eines landwirtschaftlichen Arbeitsgerätes, deren Ränder übereinander zu liegen kommen, aufweisend:
- einen ersten Abschnitt (102, 103), welcher eine erste, einen U-förmigen Querschnitt aufweisende Aufnahme aufweist, welcher geeignet ist, den Rand des ersten Teils (10B) zu überlappen, und welcher eine Gewindebohrung (105, 108) aufweist, welche geeignet ist, mit der Gewindesteigung einer Schraube (110) zusammenzuwirken; und
- einen zweiten Abschnitt (101), welcher eine Öffnung (104) trägt, welche geeignet ist, die Schraube (110) aufzunehmen, und welcher auf dem Rand des zweiten Teils (11 B) derartig zu liegen kommt, dass in einer Position zur festen Verbindung der Teile (10B, 11 B) die Öffnung (104) über der Gewindebohrung (105, 108) angeordnet ist und dass die Schraube (110) das erste und zweite Teil (10B, 11 B) durchdringt und in der Gewindebohrung (105, 108) festgehalten wird,
wobei die Vorrichtung **dadurch gekennzeichnet ist, dass** die erste Aufnahme einen Zapfen (106) in der Verlängerung der Gewindebohrung (105, 108) aufweist, welcher geeignet ist, mit einer entsprechenden, in dem ersten Teil (10B) eingebrachten Öffnung (12) in der Position zur festen Verbindung der Teile (10B, 11 B) zusammenzuwirken.

2. Vorrichtung nach Anspruch 1, **dadurch gekennzeichnet, dass** die erste Aufnahme mindestens eine Erweiterung (209) aufweist, welche geeignet ist, mit einer entsprechenden, zu diesem Zweck auf dem ersten Teil (10B) vorgesehenen Form zusammenzuwirken, um die Position und / oder die Orientierung der Vorrichtung in Bezug auf das erste Teil (10B) zu steuern.

3. Vorrichtung nach Anspruch 1 oder 2, **dadurch gekennzeichnet, dass** in der Position zur festen Verbindung der zweite Abschnitt (101) eine zweite, einen U-förmigen Querschnitt aufweisende Aufnahme definiert, welche den Rand des zweiten Teils (11 B) überlappt, wobei der Boden der zweiten Aufnahme dem Boden der ersten Aufnahme symmetrisch gegenüber liegt, so dass schematisch ein S gebildet wird, dessen zentrale Wand (102) mit dem ersten Teil (10B) und dem zweiten Teil (11 B) in Kontakt ist.

4. Vorrichtung nach Anspruch 3, **dadurch gekennzeichnet, dass** die zweite Aufnahme einen Zapfen (211) in der Verlängerung der Öffnung (204) aufweist, welcher geeignet ist, mit einer in das zweite Teil (20) eingebrachten Öffnung (212) zusammenzuwirken.

5. Vorrichtung nach einem der Ansprüche 1 bis 4, **dadurch gekennzeichnet, dass** der zweite Abschnitt (101) eine Wand (101) aufweist, welche zwischen der Position zur festen Verbindung, in welcher sie parallel zu der zentralen Wand (102) verläuft, und einer Position zur Freigabe beweglich ist, in welcher sie in Bezug auf die zentrale Wand (102) aufgerichtet ist, um das Zusammenfügen des ersten und zweiten Teils (10B, 11 B) zu erleichtern.

6. Vorrichtung nach Anspruch 5, **dadurch gekennzeichnet, dass** die bewegliche Wand (101) in der Position zur Freigabe einen Winkel mit der zentralen Wand (102) einschließt, welcher zwischen 20 und 180° liegt.

7. Vorrichtung nach einem der Ansprüche 1 bis 6, **dadurch gekennzeichnet, dass** der erste Abschnitt (302, 303) eine untere Wand (303) aufweist, welche Folgendes aufweist:
- eine erste Fläche, welche auf der Seite der ersten Aufnahme angeordnet ist, und
- eine zweite Fläche, welche mindestens eine Rippe (307a, 307b) aufweist, die sich senkrecht zu der zweiten Fläche erstreckt.

8. Vorrichtung nach einem der Ansprüche 5 bis 7, **dadurch gekennzeichnet, dass** die Ebene der beweglichen Wand (801) in der Position zur Freigabe senkrecht zu der Ebene der zentralen Wand (802) ist und in der Position zur festen Verbindung parallel zu der Ebene der zentralen Wand (802) verläuft.

9. Vorrichtung nach einem der Ansprüche 1 bis 8, **dadurch gekennzeichnet, dass** sie aus einem thermoplastischen Material besteht.

## Claims

1. Captive device for connecting a first part (10B) and a second part (11B) of an item of motorised agricultural equipment, the edges of which are superimposed, comprising:
- a first portion (102, 103) defining a first housing being of a U section, suitable for straddling the edge of the said first part (10B) and having a tapped hole (105, 108), suitable for co-operating with the thread of a screw (110) and
- a second portion (101) having an opening (104) suitable for receiving the said screw (110) and being placed on the edge of the second part (11B) so that, in a position for connecting the said parts (10B, 11B), the said opening (104) is superimposed on the tapped hole (105, 108) and that the said screw (110) passes through the said first and second parts (10B, 11B) and is kept in the said tapped hole (105, 108),
the said device being **characterised in that** the said first housing has a boss (106), in the extension of the said tapped hole (105, 108), suitable for co-operating with a corresponding opening (12) provided in the said first part (10B) in the position for connecting the said parts (10B, 11B).

2. Device according to claim 1, **characterised in that** the said first housing has at least one extension (209) suitable for co-operating with a corresponding shape provided for this purpose on the said first part (10B), so as to control the position and/or orientation of the said device relative to the said first part (10B).

3. Device according to claim 1 or 2, **characterised in that**, in the said position for connecting, the said second portion (101) defines a second housing being of a U section, straddling the edge of the said second part (11B), the bottom of the said second housing being symmetrically opposed to the bottom of the first housing, schematically forming an S, the central wall (102) of which is in contact with the said first part (10B) and the said second part (11B).

4. Device according to claim 3, **characterised in that** the said second housing has a boss (211), in the extension of the said opening (204), suitable for co-operating with an opening (212) provided in the said second part (20).

5. Device according to any of claims 1 to 4, **characterised in that** the said second portion (101) has a wall (101) which is movable between the said position for connecting in which it is parallel with the said central wall (102) and a released position in which it is inclined relative to the said central wall (102) so as to aid the joining together of the said first and second parts (10B, 11B).

6. Device according to claim 5, **characterised in that**, in the released position, the said movable wall (101) forms an angle of between 20° and 180° with the said central wall (102).

7. Device according to any of claims 1 to 6, **characterised in that** the said first portion (302, 303) has a lower wall (303) comprising:
- a first face situated on the first housing side and
- a second face comprising at least one rib (307a, 307b) which runs perpendicularly to the said second face.

8. Device according to any of claims 5 to 7, **characterised in that** the plane of the said movable wall (801) is perpendicular to the plane of the central wall (802) in the said released position and parallel with the plane of the central wall (802) in the said position for connecting.

9. Device according to one of claims 1 to 8, **characterised in that** it is made of thermoplastic.
